# EUROPÄISCHE PATENTSCHRIFT

(11) **EP 1 612 106 B1**
(45) Veröffentlichungstag und Bekanntmachung des Hinweises auf die Patenterteilung: **08.09.2010**
(21) Anmeldenummer: 05014482.3
(22) Anmeldetag: 04.07.2005
(51) Int. Cl.: B60R 13/02

(54) **Verbundhaut**
Composite skin
Peau composite

(30) Priorität: 02.07.2004 DE 102004032278
(43) Veröffentlichungstag der Anmeldung: 04.01.2006
(73) Patentinhaber: Intier Automotive Eybl Interiors GmbH, 94315 Straubing (DE)
(72) Erfinder: Pesek, Peter, 63741 Aschaffenburg (DE)

(56) Entgegenhaltungen:
- DE-A1- 19 752 058

## Beschreibung

Die Erfindung betrifft eine Instrumententafelhaut und ein Verfahren zur Herstellung einer Instrumententafelhaut. Insbesondere betrifft die vorliegende Erfindung eine Verbundhaut für eine Instrumententafel und ein Verfahren zur Herstellung einer solchen Verbundhaut.

Nach dem Stand der Technik wird eine Verbundhaut dadurch erhalten, dass ein erstes Hautstück geformt wird mit einem abgesetzten oder vertieften Abschnitt, in den ein zweites entsprechen zugerichtetes zweites Hautstück eingelegt und flächig verbunden, insbesondere verklebt wird. Derartige Verbundhäute sind allerdings problematisch mit Blick auf ein Ablösen des zweiten Hautstücks. Dies betrifft insbesondere solche Verbundhäute, bei denen das erste Hautstück aus einem Kunststoffmaterial und das aufgeklebte zweite Hautstück aus einem wasserhaltigen Naturmaterial, insbesondere aus Leder, gefertigt sind. Bei schwankender Umgebungsfeuchtigkeit nimmt das Naturmaterial Feuchtigkeit auf oder gibt sie ab, wobei die Matrix des Naturmaterials aufquillt bzw. austrocknet. In der Folge wechselt die Längsausdehnung des Naturmaterials. Demgegenüber bleiben die Abmessungen des damit verbundenen Kunststoffmaterials des ersten Hautstücks praktisch unverändert. Im Ergebnis führt dies häufig zu Spannungen und zu einem Aufreißen der Klebestelle.

*Aus der* DE 197 52 058 A1 *ist weiterhin ein Verfahren zum Hinterschäumen von eine Kappnaht aufweisenden Lederformstücken bekannt. Das Lederformstück besteht dabei aus zwei Leder - Teilstücken. Das untenliegende Leder - Teilstück ist mit dem obenliegenden Leder - Teilstück, welches zusätzlich randseitig einen Umbug aufweist, über eine Kappnaht vernäht.*

Die vorliegende Erfindung stellt sich die Aufgabe, eine Verbundhaut für eine Instrumententafel zu schaffen, bei der die Verbindung zwischen den Hautabschnitten besonders haltbar und dauerhaft ist. Ferner stellt sich die Erfindung die Aufgabe, ein Verfahren zur Herstellung einer solchen Instrumententafelhaut anzugeben.

Diese Aufgabe wird in Bezug auf eine Vorrichtung gelöst durch die Merkmale des Anspruch 1. Hinsichtlich eines Verfahrens wird diese Aufgabe gelöst durch die Merkmale der Ansprüche 9 und 10.

Vorteilhafte Ausgestaltungen der erfindungsgemäßen Lehre ergeben sich aus den Unteransprüchen 2 bis *8* und 11.

Bevorzugte Ausführungsformen der vorliegenden Erfindung werden nachfolgend erläutert, wobei auf die beigefügten Zeichnungen Bezug genommen wird. Darin zeigen:
- Fig. 1: eine perspektivische Teilschnittansicht auf die Verbindungsstelle in einer ersten Ausführungsform der vorliegenden Erfindung:
- Fig. 2: eine perspektivische Teilschnittansicht auf die Verbindungsstelle in einer zwei- ten Ausführungsform der vorliegenden Erfindung; und
- Fig. 3: eine perspektivische Teilschnittansicht auf die Verbindungsstelle in einer Ab- wandlung der ersten Ausführungsform der vorliegenden Erfindung nach Fig. 1.

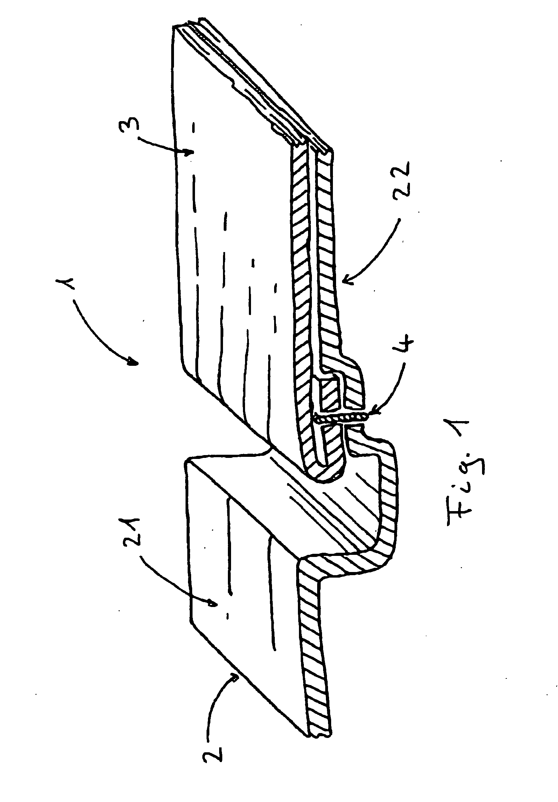

Gemäß Fig. 1 umfasst eine Verbundhaut 1 für eine Instrumententafel ein erstes Hautstück 2 aus einem ersten Material, beispielsweise aus weichem Polyvinylchlorid oder Polyurethan. Dieses erste Hautstück 2 kann in an sich bekannter Weise hergestellt sein durch Anwendung eines der gebräuchlichen Verfahren, insbesondere eines Sprüh- und Schlickergießverfahrens. Die Wandstärke des ersten Hautstücks 2 wird vorzugsweise zwischen 0,8 und 2,5 mm betragen. Auf dem am fertigen Produkt sichtbaren Abschnitt 21 der Oberfläche des ersten Hautstücks 2 kann ein Dekor beispielsweise in der Art einer Prägestruktur oder Narbung angelegt sein. In einem an den sichtbaren Abschnitt 21 angrenzenden weiteren Abschnitt 22 ist das erste Hautstück 2 mit einem zweiten Hautstück 3 bedeckt. Das zweite Hautstück 3 kann beispielsweise aus einem Lederzuschnitt gefertigt sein. Alternative Materialien sind Kunstleder, Kunststofffolie, Faden- oder Metallgewebe oder laminiertes Papier. Im überwiegenden Teil ihrer Kontaktfläche sind das erste und zweite Hautstück 2, 3 vorzugsweise durch eine Verklebung flächig miteinander verbunden. Eine Verklebung bietet sich insbesondere bei der vorgeschlagenen Materialkombination von Kunststoff und Leder an. Falls die Materialauswahl es im besonderen Fall zulässt, können auch andere Verfahren zur Oberflächenverbindung, wie beispielsweise Verschweißen, angewendet werden.

An einem Rand des zweiten Hautstücks 2 wird ein Stoß auf der Verbundhaut 1 entstehen. Im Bereich des Stoßes weist das erste Hautstück 2 zweckmäßig eine Rille oder ähnliche längliche Vertiefung auf. damit sich an der sichtseitigen Oberfläche kein Überstand des zweiten Hautstücks 3 ergibt. Die längliche Vertiefung trifft mit einem Abschnitt des Randes des zweiten Hautstücks 3 zusammen. Dieser Rand ist weiterhin in einem Abschnitt seiner Ausdehnung von der Sichtseite der Verbundhaut weg umgeschlagen. Dementsprechend liegt das zweite Hautstück 3 mit einem Teil seiner im übrigen sichtbaren Seite auf einem Teil der Oberfläche des ersten Hautstücks 2 auf, In diesem Bereich wird die Verbindung zwischen beiden Hautstücken 2, 3 vorzugsweise in der gleichen Art erfolgen, wie dies im überwiegenden Teil der Kontaktfläche 22 vorgesehen ist. Zusätzlich erfolgt eine mechanische stabile Verbindung in diesem Bereich durch ein die Hautstücke 2, 3 durchdringendes Verbindungsmittel 4. Als Verbindungsmittel 4 kommt vorzugsweise ein Faden zur Anwendung, der in einem Nähvorgang durch die aufeinander gelegten Hautstücke hindurchgeführt wird und eine gerade oder gezackte Einfach- oder Mehrfachnaht bildet. Alternativ kann die mechanische Verbindung auch durch eine oder mehrere Reihen von vereinzelten Verbindungsmitteln wie beispielsweise Klammern oder kleinen Nieten erfolgen. Diese Verbindung stellt sicher, dass auch im Fall des nachträglichen Schrumpfens des zweiten Hautstücks ein Aufreißen oder Aufstellen der Hautstücke 2, 3 im Bereich des Stoßes nicht erfolgt. Im Bereich der mechanischen Verbindung ist die sichtseitige Lage des zweiten Hautstücks 3 mit dem umgeschlagenen Abschnitt des Rands vorteilhaft zusätzlich flächig verbunden, beispielsweise verklebt.

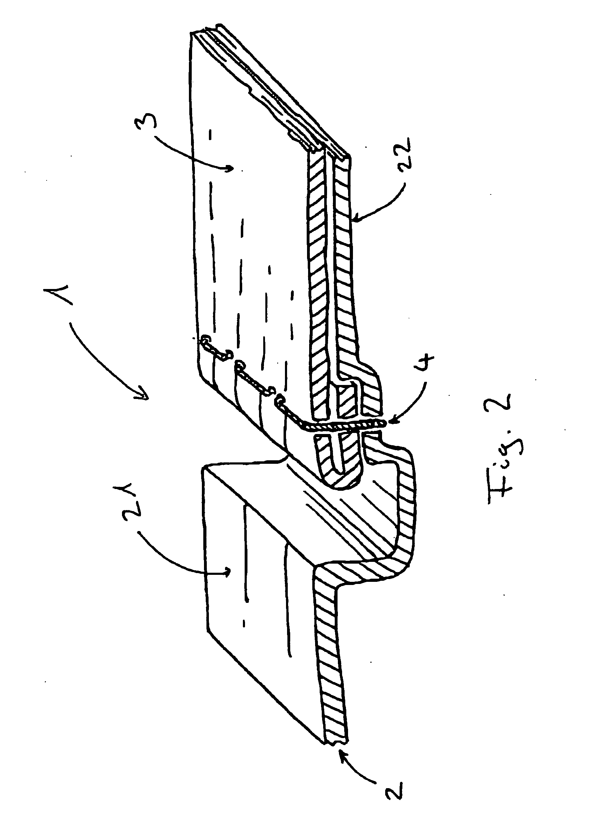

In einer alternativen weiteren Ausführungsform gemäß Fig. 2 verläuft das Verbindungsmittel 4 nicht nur durch die auf dem ersten Hautstück 2 aufliegende Lage des umgeschlagenen Randabschnitts des zweiten Hautstücks 3 hindurch, sondern durchdringt auch durch dessen sichtseitigen angrenzenden Abschnitt. Auf diese Art treten die Befestigungsmittel 4 an der Sichtseite des zweiten Hautstücks 3 aus und tragen zum optischen Eindruck der Verbundhaut bei.

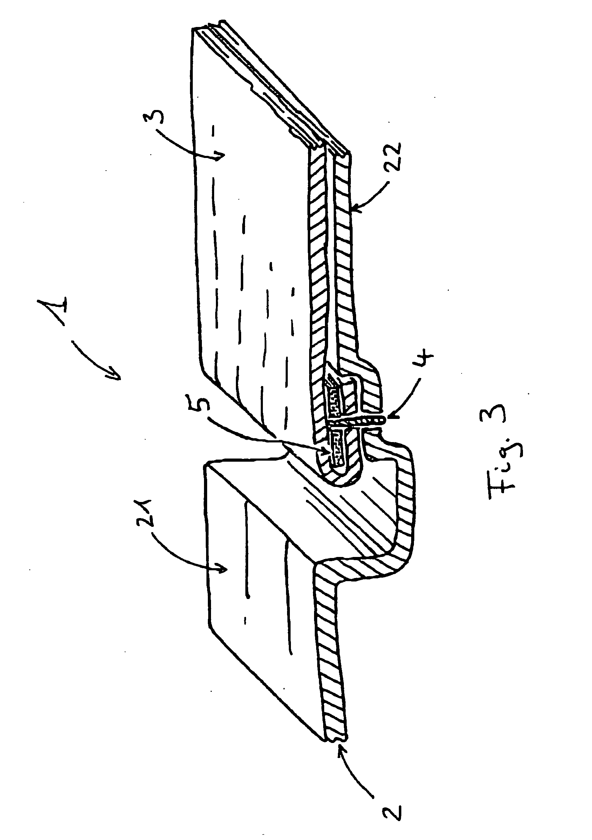

In einer besonderen Ausgestaltung beider vorbeschriebenen Ausführungsformen kann die Stabilität der Verbindung gegenüber einer Spannung aufgrund von Schrumpfung eines Hautstücks 2, 3 nochmals verbessert werden. Dazu ist gemäß Fig. 3 in den Umschlag am Rand des ersten Hautstücks ein flaches Strukturteil 5 eingelegt. Das Befestigungsmittel 4 verläuft durch Aussparungen, Durchbrüche oder Bohrungen durch das Strukturteil 5 hindurch und hält dieses in fester Verbindung zum ersten Hautstück 2. Das Strukturteil 5 kann beispielsweise ein flacher Streifen aus Melallblech, Kunststoff, Pappe oder dergleichen sein. Vorteilhaft wird das Strukturteil 5 entlang seiner beiden flachen Seiten zusätzlich noch mit dem angrenzenden zweiten Hautstück 3 verklebt.

Um mit den beschriebenen Verbundhäuten 1 eine Instrumententafel für ein Fahrzeug auszurüsten, wird diese mit einem festen Träger, beispielsweise einem ABS Spritzgussteil, durch eine Schaumschicht in bekannter Weise verbunden. Dazu wird die Verbundhaut in einer Negativform gehalten. Darüber wird mit geringem Abstand der feste Träger ausgerichtet. Anschließend wird der Spalt zwischen Verbundhaut 1 und Träger mit einem flüssigen Schaum, beispielsweise einem Zweikomponentenschaum, ausgefüllt. Um den Durchtritt des wasserflüssigen Schaummaterials durch die Verbundhaut an den Stellen, an denen diese von dem Befestigungsmittel 4 durchdrungen wird, zu unterbinden, kann auf der Innenseite des ersten Hautstücks 2 im Bereich der Durchtritte des Befestigungsmittels 4 ein Abdichtband angebracht werden.

## Patentansprüche

1. Instrumententafelhaut (1) umfassend ein erstes und zweites Hautstück (2,3), wobei das zweite Hautstück (3) aus Leder besteht und wobei erstes und zweites Hautstück (2,3) in einem Verbindungsabschnitt aufeinanderliegen, wobei ein Abschnitt des Randes des zweiten Hautstücks (3) umgeschlagen und der umgeschlagene Abschnitt mit dem angrenzenden ersten Hautstück (2) durch ein die Hautstücke durchdringendes Befestigungsmittel (4) verbunden ist, **dadurch gekennzeichnet, dass** das erste Hautstück (2) aus einem Kunststoffmaterial besteht, und dass in einem den Umschlag angrenzenden Abschnitt des zweiten Hautstücks (3) die beiden Hautstücke (2,3) aufeinanderliegen und flächig miteinander verbunden sind.

2. Instrumententafelhaut (1) nach Anspruch 1, wobei das zweite Hautstück (3) am Umschlag mit dem angrenzenden ersten Hautstück (2) durch ein die Hautstücke (2,3) durchdringendes Befestigungsmittel (4) verbunden ist.

3. Instrumententafelhaut (1) nach einem der Ansprüche 1 bis 2, wobei der Umschlag ein flaches Strukturelement (5) umschließt.

4. Instrumententafelhaut (1) nach einem der Ansprüche 1 bis 3, wobei das Befestigungsmittel (4) ausgewählt ist aus einem Faden, einer Anzahl von Klammem oder einer Anzahl von Nieten.

5. Instrumententafelhaut (1) nach Anspruch 1, wobei ein Grundbestandteil des ersten Hautstücks (2) ausgewählt ist aus Polyvinylchlorid und Polyurethan.

6. Instrumententafelhaut (1) nach einem der Ansprüche 1 bis 4, wobei ein Grundbestandteil des zweiten Hautstücks (3) ausgewählt ist aus Leder, Fadengewebe, Drahtgewebe und laminiertem Papier.

7. Instrumententafelhaut (1) nach Anspruch 1, wobei die flächige Verbindung durch Verklebung gebildet ist.

8. Instrumententafelhaut (1) nach Anspruch 1 bis 7, wobei das erste Hautstück im Bereich des aufliegenden Umschlags eine längliche Vertiefung aufweist.

9. Verfahren zur Herstellung einer Instrumententafelhaut (1), umfassend die aufeinanderfolgenden Schritte des
i. Herstellens eines ersten und eines zweiten Hautstücks (2, 3);
ii. Umschlagens eines freien Abschnitts des zweiten Hautstücks (3) ;
iii. flächigen Aufeinanderlegens des umgeschlagenen Abschnittes des zweiten Hautstücks (3) entlang eines Abschnitts der Oberfläche des ersten Hautstücks (2);
iv. Einbringens eines die aufeinanderliegenden Abschnitte der Hautstücke (2, 3) durchdringenden Verbindungsmittels (4);
**dadurch gekennzeichnet,**
**dass** in einem anschließenden Schritt v. ein flächiges Verbinden der beiden Hautstücke (2, 3) in einem an den Umschlag angrenzenden Bereich des zweiten Hautstücks (3) erfolgt.

10. Verfahren zur Herstellung einer Instrumententafelhaut (1), umfassend die aufeinanderfolgenden Schritte des
i. Herstellens eines ersten und eines zweiten Hautstücks (2, 3);
ii. Hächigen Verbindens der Hautstücke (2, 3) entlang von Abschnitten ihrer Oberflächen, wobei der betreffende Oberflächenabschnitt des zweiten Hautstücks (3) an dessen Rand angrenzt, erfolgt;
iii. Einbringens eines die aufeinanderliegenden Abschnitte der Hautstücke (2, 3) durchdringenden Verbindungsmittels (4);
iv. Umschlagens des freien Abschnitts des zweiten Hautstücks (3) über den in Schritt (a.) mit dem ersten Hautstück verbundenen Abschnitt
**dadurch gekennzeichnet,**
**dass** in einem anschließenden Schritt v. ein flächiges Verbinden der beiden Hautstücke (2, 3) in einem an den Umschlag angrenzenden Bereich des zweiten Hautstücks (3) erfolgt.

11. Verfahren nach Anspruch 9, wobei anschließend an Schritt iii ein Strukturteil (5) auf den Abschnitt des zweiten Hautstücks (3) angeordnet wird.

## Claims

1. Instrument panel skin (1), comprising a first and a second piece of skin (2, 3), the second piece of skin (3) consisting of leather and the first and second pieces of skin (2, 3) lying one on top of the other in a connecting portion, a portion at the border of the second piece of skin (3) being folded over and the folded-over portion being connected to the adjacent first piece of skin (2) by a fastening means (4) penetrating the pieces of skin, **characterized in that** the first piece of skin (2) consists of a plastics material, and **in that**, in a portion of the second piece of skin (3) adjacent to the fold, the two pieces of skin (2, 3) lie one on top of the other and are connected to each other in a flat form.

2. Instrument panel skin (1) according to Claim 1, the second piece of skin (3) being connected at the fold to the adjacent first piece of skin (2) by a fastening means (4) penetrating the pieces of skin (2, 3).

3. Instrument panel skin (1) according to either of Claims 1 and 2, the fold enclosing a flat structural element (5).

4. Instrument panel skin (1) according to one of Claims 1 to 3, the fastening means (4) being selected from a thread, a number of clips or a number of rivets.

5. Instrument panel skin (1) according to Claim 1, a basic constituent part of the first piece of skin (2) being selected from polyvinyl chloride and polyurethane.

6. Instrument panel skin (1) according to one of Claims 1 to 4, a basic constituent part of the second piece of skin (3) being selected from leather, thread-based fabric, wire mesh and laminated paper.

7. Instrument panel skin (1) according to Claim 1, the connection in a flat form being formed by adhesive bonding.

8. Instrument panel skin (1) according to Claims 1 to 7, the first piece of skin having an elongated depression in the region of the fold lying on top.

9. Method for producing an instrument panel skin (1), comprising the successive steps of
i. producing a first and a second piece of skin (2, 3);
ii. folding over a free portion of the second piece of skin (3);
iii. laying the folded-over portion of the second piece of skin (3) along a portion of the surface of the first piece of skin (2) flat on the latter;
iv. introducing a connecting means (4) penetrating the portions of the pieces of skin (2, 3) lying one on top of the other;
**characterized in that**,
in a subsequent step v., the two pieces of skin (2, 3) are connected in a flat form in a region of the second piece of skin (3) adjacent to the fold.

10. Method for producing an instrument panel skin (1), comprising the successive steps of
i. producing a first and a second piece of skin (2, 3);
ii. connecting the pieces of skin (2, 3) in a flat form along portions of their surfaces, the relevant surface portion of the second piece of skin (3) being adjacent to the border thereof;
iii. introducing a connecting means (4) penetrating the portions of the pieces of skin (2, 3) lying one on top of the other;
iv. folding the free portion of the second piece of skin (3) over the portion connected to the first piece of skin in step ii,
**characterized in that**,
in a subsequent step v., the two pieces of skin (2, 3) are connected in a flat form in a region of the second piece of skin (3) adjacent to the fold.

11. Method according to Claim 9, a structural part (5) being arranged on the portion of the second piece of skin (3) after step iii.

## Revendications

1. Recouvrement (1) pour tableau de bord, comprenant une première et une deuxième pièce de recouvrement (2, 3), dans lequel la deuxième pièce de recouvrement (3) est constituée de cuir et la première et la deuxième pièce de recouvrement (2, 3) sont superposées dans une partie de liaison, une partie du bord de la deuxième pièce de recouvrement (3) est rabattue et la partie rabattue est reliée à la première pièce de recouvrement (2) adjacente par un moyen de fixation (4) qui traverse les pièces de recouvrement, **caractérisé en ce que** la première pièce de recouvrement (2) est constituée d'une matière synthétique et **en ce que** dans la partie de la deuxième pièce de recouvrement (3) adjacente au rabattement, les deux pièces de recouvrement (2, 3) sont superposées et sont reliées l'une à l'autre par leur surface.

2. Recouvrement (1) pour tableau de bord selon la revendication 1, dans lequel la deuxième pièce de recouvrement (3) est reliée sur le rabattement à la première pièce de recouvrement (2) adjacente par un moyen de fixation (4) qui traverse les pièces de recouvrement (2, 3).

3. Recouvrement (1) pour tableau de bord selon l'une des revendications 1 et 2, dans lequel le rabattement entoure un élément structurel plat (5).

4. Recouvrement (1) pour tableau de bord selon l'une des revendications 1 à 3, dans lequel le moyen de fixation (4) est sélectionné parmi un fil, plusieurs agrafes et plusieurs rivets.

5. Recouvrement (1) pour tableau de bord selon la revendication 1, dans lequel un composant de base de la première pièce de recouvrement (2) est sélectionné parmi le poly(chlorure de vinyle) et le polyuréthane.

6. Recouvrement (1) pour tableau de bord selon l'une des revendications 1 à 4, dans lequel un composant de base de la deuxième pièce de recouvrement (3) est sélectionné parmi le cuir, un tissu de fils, un treillis et un stratifié de papier.

7. Recouvrement (1) pour tableau de bord selon la revendication 1, dans lequel la liaison de surface est formée par un collage.

8. Recouvrement (1) pour tableau de bord selon les revendications 1 à 7, dans lequel la première pièce de recouvrement présente un creux allongé dans la zone de superposition du rabattement.

9. Procédé de fabrication d'un recouvrement (1) pour tableau de bord, comprenant les étapes successives qui consistent à :
i. préparer une première et une deuxième pièce de recouvrement (2, 3),
ii. rabattre une partie libre de la deuxième pièce de recouvrement (3),
iii. superposer à plat la partie rabattue de la deuxième pièce de recouvrement (3) sur une partie de la surface de la première pièce de recouvrement (2),
iv. insérer un moyen de liaison (4) qui traverse les parties superposées des pièces de recouvrement (2, 3),
**caractérisé en ce que**
dans une étape v. qui suit, les deux pièces de recouvrement (2, 3) sont reliées à plat dans une partie de la deuxième pièce de recouvrement (3) adjacente au rabattement.

10. Procédé de fabrication d'un recouvrement (1) pour tableau de bord, comprenant les étapes successives qui consistent à :
i. préparer une première et une deuxième pièce de recouvrement (2, 3),
ii. relier à plat les pièces de recouvrement (2, 3) sur des parties de leur surface, la partie concernée de la surface de la deuxième pièce de recouvrement (3) étant adjacente à son bord,
iii. insérer un moyen de liaison (4) qui traverse les parties superposées des pièces de recouvrement (2, 3),
iv. rabattre la partie libre de la deuxième pièce de recouvrement (3) au-dessus de la partie reliée à la première pièce de recouvrement à l'étape ii.,
**caractérisé en ce que**
dans une étape v. qui suit, les deux pièces de recouvrement (2, 3) sont reliées à plat dans une partie de la deuxième pièce de recouvrement (3) adjacente au rabattement.

11. Procédé selon la revendication 9, dans lequel une pièce structurelle (5) est disposée sur la partie de la deuxième pièce de recouvrement (3) à la suite de l'étape iii.
